# EUROPEAN PATENT SPECIFICATION

(11) **EP 4 334 016 B1**
(45) Date of publication and mention of the grant of the patent: **11.12.2024**
(21) Application number: 22721823.7
(22) Date of filing: 26.04.2022
(51) Int. Cl.: B63B 17/00, B63H 21/14

(54) **METHOD OF TREATING A PURGE GAS STREAM TO REMOVE AMMONIA**
VERFAHREN ZUR BEHANDLUNG EINES SPÜLGASSTROMS ZUR ENTFERNUNG VON AMMONIAK
PROCÉDÉ DE TRAITEMENT D'UN FLUX DE GAZ DE PURGE POUR ÉLIMINER L'AMMONIAC

(30) Priority: 05.05.2021 GB 202106387
(43) Date of publication of application: 13.03.2024
(73) Proprietor: LGE IP MANAGEMENT COMPANY LIMITED, KY11 2YD Fife (GB)
(72) Inventor: FELBAB, Nikola, Edinburgh Lothian EH3 9JY (GB)
(74) Representative: Murgitroyd & Company
(86) International application number: PCT/GB2022/051049
(87) International publication number: WO 2022/234250

(56) References cited:
- EP-A1- 0 450 896
- WO-A1-2016/167708
- CN-U- 211 025 717
- KR-B1- 102 232 540
- RU-C1- 2 372 568
- SU-A1- 969 668

## Description

The present invention relates to a method of treating an ammonia-containing purge gas stream from an engine on a marine or seagoing vessel.

### Background

Ammonia-fuelled ships are increasingly being developed and built, or engines adapted to be driven by ammonia-fuel, following a 2018 International Maritime Organisation commitment to cut International shipping's greenhouse gas emissions. Meanwhile, on ships and vessels with engines running on low-flashpoint fuels, regulations require the engine(s), and piping between fuel valve train(s), to be purged, typically with nitrogen, whenever the engine stops, either intentionally or from trips. During the purging process, some of the fuel will evaporate into the nitrogen purging stream, and so be vented from the vessel along with the nitrogen.

CN112696289 A discloses that the purge gas from a marine vessel engine contains ammonia and other contaminants and it is treated in a gas-liquid separation device before being vented.

RU2372568C, EP0450896A, WO2016/167708A, CN211025717U and SU969668A are also useful in understanding the background technology.

When the fuel is ammonia, it is desirable to minimise emissions of ammonia gas because ammonia is toxic. This is particularly for crew safety, and where an engine stops at unplanned times, for example due to an engine trip.

The present invention seeks to help overcome this problem.

### Summary

According to one aspect of the present invention, there is provided a method of treating an ammonia-containing purge gas stream from an engine on a marine or seagoing vessel comprising at least the steps defined in Claim 1.

Steps (a) and (b) of the method of treating are optionally a first stage of a batch process, as well as a first stage of a more general or overall process for treating a vent gas stream and regenerating the treatment process on a vessel.

The method further comprises the steps of:
providing a second tank containing a caustic solution;
passing the caustic solution from the second tank into the first tank to provide a resultant solution and a gaseous ammonia stream; and
passing the gaseous ammonia stream to a storage tank or a reliquefaction unit.

Such steps provide a second stage of an overall process, or a first stage of a regenerating process.

The method further comprises the steps of:
passing the resultant solution from the first tank into the second tank;
heating the resultant solution in the second tank to provide a water vapour stream and a recharged caustic solution;
condensing the water vapour stream to provide a liquid water stream; and
passing the liquid water stream into the first tank to provide the water of step (b).

This provides a third stage of an overall method of treating, or a second stage of a regenerating process.

### Detailed embodiments and drawings

Embodiments of the present invention will now be described by way of example only, and with reference to the accompanying drawings in which:
Figure 1 shows schematically aspects and embodiments of the present invention both individually and collectively; and
Figure 2 is a graph of molar composition of ammonia in a reduced ammonia vent gas against time.

The use of ammonia as a fuel in engines has been known for some time. It is now possible to provide what is termed "green ammonia", by reacting nitrogen separated from air with hydrogen made by wind or solar-powered water electrolysis. Green ammonia is potentially seen as environmentally friendlier than fossil fuels by having a no-carbon emissions. Green ammonia is also a cheaper fuel for the shipping industry than hydrogen, as it is easier to store and can be burned in standard internal combustion engines.

However, ammonia is also considered to be relatively toxic. Thus, the regulations that require a ship's or vessel's engine(s), and piping between fuel valve train(s), to be purged with nitrogen whenever the engine stops, either intentionally or from trips, may lead some of the ammonia fuel to be evaporated into the purging nitrogen stream, and thus be vented along with the nitrogen. Venting of ammonia is undesirable due to its toxicity.

An example of the present invention provides a method of treating an ammonia-containing purge gas stream from an engine on a marine or seagoing vessel comprising as a first stage, the steps of:
(a) providing the ammonia-containing purge gas stream from the vessel engine; and
(b) passing the ammonia-containing purge gas stream into a first tank containing water to provide a reduced-ammonia vent gas stream.

The vessel may be any marine or seagoing vessel, including ships, carriers etc.

The nature of the engine may be an existing or standard internal combustion engine, or an engine that has been further developed to use ammonia fuel. Some engines are also able to use a mixture of ammonia and an additional fuel, and the present invention extends to all such engines. Purging gas streams are known in the art, and generally comprise one or more inert gases, including inert to the nature of the engine fuel. A purging gas stream is passed through an engine, line, tank, piping etc., to purge these of gases or liquids for various reasons, including a change of fuel in the engine, or cleanliness or to prevent undesirable build up. The commonest gas used for a purge gas stream is nitrogen, although other gases may be used or mixed.

The method of the present invention passes a purge gas stream on the vessel through an engine on the vessel, (i.e. a vessel engine), optionally also associated pipework and the piping between fuel valve train(s), to be purged, to provide a resultant ammonia-containing purge gas stream, i.e. including ammonia that has evaporated and needs to be purged away from the engine(s), etc.

In the present invention, such a stream is passed into a first tank containing water to provide a reduced-ammonia vent gas stream. Water is known to dissolve ammonia, such that the resultant gas passing through and out of the water will have a reduced-ammonia content, herein termed a reduced-ammonia vent gas stream.

Optionally, the first tank contains water comprising no or a de minimis amount of ammonia, such as a 'trace amount'.

Optionally, the ammonia-containing purge gas stream is passed through the water of the first tank with or under some form of excitation so as to increase the surface area between the ammonia-containing purge gas stream and the water. Various means and apparatus are known to achieve excitation of a gas stream through a liquid stream, including various dispersement means. One common means of achieving excitation in this way is sparging, which uses a sparging device, means or `head' intended to create bubbles of the vent gas stream, and therefore a high or higher surface area for ammonia absorption.

It is known that ammonia can dissolve in ammonia-free water even at ambient temperature and pressure. The absorption can be assisted with enhanced conditions such as above ambient pressure. The absorption provides a reduced-ammonia vent gas stream that may be at least 90% free of its ammonia content, possibly >95% ammonia free, and even >99% ammonia free.

It is possible that where the reduced-ammonia gas stream is >99% ammonia free, the reduced-ammonia vent gas stream can be directly vented to atmosphere. Thus, the method of the present invention can further provide the step of:
venting the reduced-ammonia vent gas stream to atmosphere.

Additionally or alternatively, the reduced-ammonia vent gas stream is further treated by one or more further treating processes or steps. One known further treatment step is use of scrubbing, in particular as an acid-scrubbing polishing step, intended to further capture or recover ammonia in the vent gas stream. Thus, the method of the present invention can further provide the step of:
further treating the reduced ammonia vent gas stream by acid scrubbing.

The steps outlined and described above provide a first stage of a process. Such steps may be carried out for a required time or duration, i.e. as a batch process, for treating an ammonia-containing vent gas stream.

A resultant ammonia-rich water remains in the first tank.

The present invention further provides as a second stage the steps of:
(c) providing a second tank containing a caustic solution;
(d) passing the caustic solution from the second tank into the first tank to provide a resultant solution and a gaseous ammonia stream; and
(e) passing the gaseous ammonia stream to a storage tank or a reliquefaction unit.

Caustic solutions are well known in the art, and typically involve one or more alkalis. Concentrated forms of caustic solution are preferred. Desired concentration of caustic solutions for ammonia-release are well known in the art and not further described herein.

By providing a caustic solution in a second tank, and passing the caustic solution from the second tank into the first tank to mix with the ammonia-rich water therein, the caustic solution provides the release of the ammonia dissolved in the first tank in a gaseous form, to provide a gaseous ammonia stream, and a resultant solution, generally being a less concentrated caustic solution.

The passing of solutions between the first tank and the second tank and the second tank and the first tank may be provided by any suitable means, including one or more pumps etc. known in the art. Optionally, one pump is able to provide the means to pump liquids between both tanks, using appropriate valving and piping.

The gaseous ammonia stream can be directed either back to a suitable storage tank such as an ammonia fuel tank, or to an ammonia reliquefaction unit, or to both as desired or required. In this way, the ammonia that would previously have been vented with the vent gas stream has now been recovered.

The recovery of the ammonia provides a second stage of the method of treating an ammonia-containing vent gas stream, alternatively or additionally forming a first stage of a regenerating process of the system described herein.

The present invention further provides as a third stage the steps of:
(f) passing the resultant solution from the first tank into the second tank;
(g) heating the resultant solution in the second tank to provide a water vapour stream and a recharged caustic solution;
(hi) condensing the water vapour stream to provide a liquid water stream; and
(i) passing the liquid water stream into the first tank to provide the water of step (b).

The heating of the resultant solution in the second tank may be provided by any suitable means, including electric, steam and other heating means known in the art.

The condensing of a water vapour stream may be provided by any suitable condenser, generally having a condensing stream running therethrough intended to reduce the temperature of the water vapour stream to provide a liquid water stream.

The liquid water stream is therefore now free of ammonia and ready for reuse back in the first tank, whilst the caustic solution remaining in the second tank has also been recovered and is ready for reuse when next required.

The recovery of the ammonia-free water and caustic solution provides a third stage of the method of treating an ammonia-containing vent gas stream, alternatively or additionally forming a second stage of a regenerating process of the system described herein.

Thus, overall, the present invention shows a method for treating and regenerating an ammonia-containing purge gas stream from an engine on a marine or seagoing vessel comprising at least the steps of:
(a) providing an ammonia-containing purge gas stream from the vessel engine;
(b) passing the ammonia-containing purge gas stream into a first tank containing water to provide a reduced-ammonia vent gas stream;
(c) optionally sparging the ammonia-containing purge gas stream in the water via a sparging device; and
(d) either venting the reduced-ammonia vent gas stream to atmosphere or further treating the reduced ammonia vent gas stream;
(e) providing a second tank containing a caustic solution;
(f) passing the caustic solution from the second tank into the first tank to provide a resultant solution and a gaseous ammonia stream;
(g) passing the gaseous ammonia stream to a storage tank or a reliquefaction unit;
(h) passing the resultant solution from the first tank into the second tank;
(i) heating the resultant solution in the second tank to provide a water vapour stream;
(j) condensing the water vapour stream to provide a liquid water stream;
(k) passing the liquid water stream into the first tank to provide the water of step (b).

The use of consecutive lettering for the steps described herein is not limiting to that order where one or more of the steps could be carried out in an alternative sequence.

The skilled person can see that the steps (a) to (k) of the system can be repeated, such that the system provides a cycle.

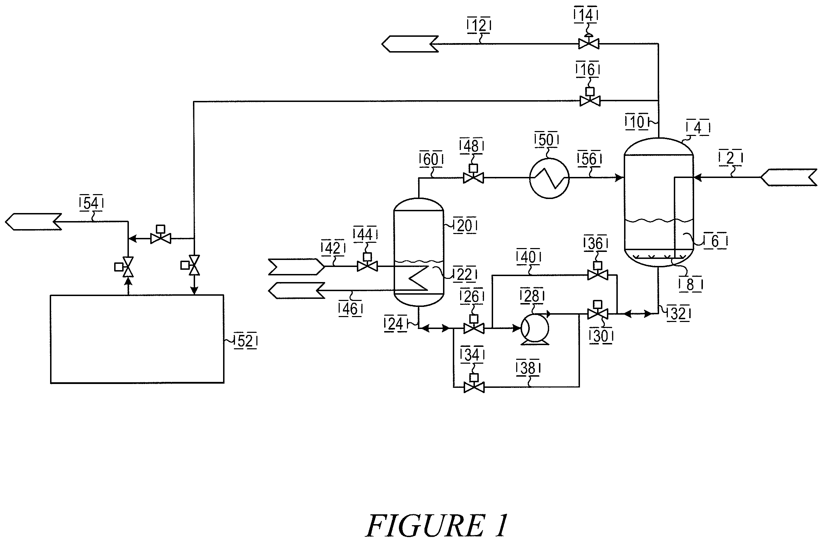

Referring to the drawings, Figure 1 shows, there is shown a method of treating an ammonia-containing purge gas stream 2 on a vessel (not shown) comprising at least the steps of providing the ammonia-containing purge gas stream 2 from a vessel engine being purged (not shown); and passing the ammonia-containing purge gas stream 2 into a first tank 4 containing water 6 to provide a reduced-ammonia vent gas stream.

The purging of engine(s) on a vessel by a purging gas stream such as nitrogen is well known in the art to remove gases away from the engine when it stops, either intentionally or not. Where the removed gas or gases are not harmful or toxic, they may be vented directly to atmosphere.

However, ammonia is relatively toxic. Thus, a purging gas stream for an ammonia-using engine should not be vented directly to atmosphere.

In the example of the present invention, the ammonia-containing purge gas stream 2 comprises the purging gas nitrogen, and ammonia. This stream 2 passes through an ammonia-free water 6 in the first tank 4, so that the water 6 is able to absorb the ammonia content. The ammonia-containing purge gas stream 2 can be sparged through a suitable sparging device or head 8 at or near the bottom of the first tank 4, to disperse the passage of the ammonia-containing purge gas stream 2 through the water 6 in a manner known in the art, such that the ammonia is better dissolved into the water 6, and the vent gas is 'cleaned' of its ammonia content.

The resultant reduced-ammonia vent gas stream from the water 6 passes up through the first tank 4 into a suitable header pipe 10. Following the opening of a vent valve 14, the resultant reduced-ammonia or even ammonia-free vent gas stream can be either vented to atmosphere, or if required further treated by a subsequent acid-scrubbing polishing step or the like, along pipeline 12 in a manner known in the art, and not further described herein.

The provision of the ammonia-containing purge gas stream 2 needing to be cleaned can be provided as a first stage. This stage provides venting of a wholly or substantially ammonia-free vent gas to atmosphere, or where required, to a subsequent acid-scrubbing polishing step.

Once treatment of the ammonia-containing purge gas stream 2 has stopped or otherwise been completed, the vent valve 14 can be closed.

Over time, the water 6 in the first tank 4 becomes ammonia-rich and needs changing or cleaning to be able to absorb more ammonia. This is typically termed 'regenerating', and can either be a second stage of the method of treating, or a first stage of a regenerating process for regenerating the water in the tank 4.

Figure 1 shows a second tank 20 containing a caustic solution, optionally a concentrated caustic solution. When required, the caustic solution 22 can be pumped via a bottom pipeline 24, pump valve 26, pump 28, next pump valve 30 and pipeline 32, into the first tank 4. The caustic solution 22 then reacts with the ammonia-rich water 6 in the first tank 4, to release the absorbed ammonia, forming ammonia gas in a manner known in the art. By opening of return valve 16, the gaseous ammonia stream thus created in the first tank 4 can be released through the header pipe 10, return valve 16, and then either be returned to a storage or fuel tank 52, and/or sent to reliquefaction through pipeline 54, by the use of appropriate valves after the initial return valve 16. In this way, the ammonia provided by the ammonia-containing purge gas stream 2 and absorbed by the water 6, is wholly or substantially recovered.

In either a third stage of the method of the present invention as described herein, or a second stage of a regenerating process, the resultant solution in the first tank 4 can be passed back into the second tank 20 via the transfer pump 28 via closure of the pump valves 26 and 30 and opening of the return valves 36 and 34 in by-pass pipelines 40 and 38.

Thus, the resultant solution from the first tank 4 passes into the second tank 20. The resultant solution can now be heated by a steam stream 42 through a control valve 44, (and resulting in a steam condensate stream 46 out of the second tank 20). The heating of the resultant solution in the second tank 20 provides a water vapour stream that passes upwardly and through a header pipe 60, through a control valve 48, into a suitable water condenser 50 to be condensed. The so-formed condensed liquid water stream 56 that is recovered in this way is ammonia- and caustic-free, can be provided back into the first tank 4 to provide the water for step (b) as described above, i.e. the clean water able to absorb the ammonia in the ammonia-containing purge gas stream 2 to provide a reduced-ammonia vent gas stream through piping 10 and 12.

Following the regenerating process, there is provided recovery and return of the ammonia-free water in the first tank 4, and of the caustic solution 22 in the second tank 20, ready for further treatment of ammonia-containing vent gas in another cycle as described above.

Thus, the process is complete, and the cycle may begin again.

Depending upon the required purge, and selected water volumes, 100% ammonia recovery can be approached, with greater than 99% ammonia recover being expected. If, instead of directly venting the reduced-ammonia vent gas stream to atmosphere, subsequent acid-scrub polishing is used, the acid consumption decreases proportionately.

The skilled person can see that the methods and steps described above show an overall method for treating and regenerating an ammonia-containing purge gas stream on a vessel comprising at least the steps of:
(a) providing an ammonia-containing purge gas stream 2 from an engine;
(b) passing the ammonia-containing purge gas stream 2 into and through a first tank 4 containing water 6 to provide a reduced-ammonia vent gas in pipeline 10;
(c) sparging the ammonia-containing purge gas stream 2 in the water 6 via a sparging device 8 to increase the ammonia absorption; and
(d) either venting the reduced-ammonia vent gas stream to atmosphere via pipeline 12 or further treating the reduced ammonia vent gas stream;
(e) providing a second tank 20 containing a caustic solution 22;
(f) when required, passing the caustic solution 22 from the second tank 20 into the first tank 4 to provide a resultant solution and a gaseous ammonia stream;
(g) passing the gaseous ammonia stream to a storage tank 52 or a reliquefaction unit via pipeline 54;
(h) passing the resultant solution from the first tank 4 into the second tank 20;
(i) heating the resultant solution in the second tank to provide a water vapour stream;
(j) condensing the water vapour stream in pipeline 60 to recover a liquid water stream 56; and
(k) passing the liquid water stream 56 into the first tank 4 to provide the water 6 of step (b).

The skilled person can see that the steps (a) to (k) of the method can be repeated, such that the method provides a cycle.

Figure 1 also shows an apparatus an apparatus for reducing ammonia content of a vessel engine vent gas stream comprising:
- a first ammonia-absorption tank containing water; and a sparging device present in the first tank;
- a second regenerating tank containing a concentrated caustic solution;
- a transfer pump between the first and second tanks;
- a condenser between the second and first tanks; and
- an ammonia storage tank.

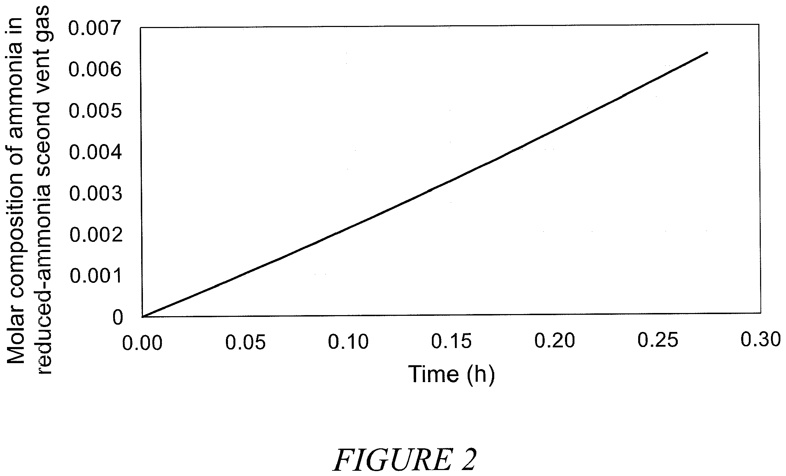

Figure 2 is a graph of molar composition of ammonia in a reduced-ammonia vent gas against time. This is an example illustrating the reduction in vented ammonia content during the first stage of processing described hereinabove. Figure 2 can be interpreted in relation to Figure 1, with the following parameters. The ammonia-containing purge gas stream 2 flows at a rate of 1320 kg/h with a composition containing 44 mol% ammonia, (with the balance being nitrogen), into the first tank 4. The first tank 4 contains 5 m² of water 6. The ambient temperature, which is assumed to be the prevailing temperature in the system itself, is 25°C. The pressure in the first tank 4 is maintained at 2 bar(g) using the control valve 14. Figure 2 shows the ammonia content of the reduced-ammonia vent gas in pipeline 10 (and ultimately pipeline 12) as a function of time.

Over the calculation period in Figure 2 of 0.275 hours, a total of 117.23 kg of ammonia enters the first tank 4 as a part of the ammonia-containing purge gas stream 2. After passing through the water 6, only 0.46 kg of ammonia is not absorbed by the water, which therefore leaves the first tank 4 as part of the reduced-ammonia vent gas stream (in pipeline 10, and ultimately pipeline 12). Thus, 116.77 kg are captured in the water 6 in the first tank 4, representing an ammonia capture efficiency of 99.6%.

## Claims

1. A method of treating an ammonia-containing purge gas stream (2) from an engine on a marine or seagoing vessel comprising at least the steps of:
(a) in a first stage, providing the ammonia-containing purge gas stream (2) from the vessel engine;
(b) passing the ammonia-containing purge gas stream through a first tank (4) containing water (6) to provide a reduced-ammonia vent gas stream;
(c) in a second stage, providing a second tank (20) containing a caustic solution (22);
(d) passing the caustic solution from the second tank into the first tank to provide a resultant solution and a gaseous ammonia stream; and
(e) passing the gaseous ammonia stream to a storage tank (52) or a reliquefaction unit;
(f) in a third stage, passing the resultant solution from the first tank (4) into the second tank (20);
(g) heating the resultant solution in the second tank to provide a water vapour stream and a recharged caustic solution;
(h) condensing the water vapour stream to provide a liquid water stream (56); and
(i) passing the liquid water stream into the first tank (4) to provide the water of step (b).

2. A method as claimed in claim 1 further comprising the step of:
sparging the ammonia-containing purge gas stream (2) in the water (6).

3. A method as claimed in claim 1 or claim 2 further comprising the step of:
venting the reduced-ammonia vent gas stream (2) to atmosphere.

4. A method as claimed in claim 1 or claim 2 further comprising the step of:
further treating the reduced ammonia vent gas stream (2) by acid scrubbing.

5. A method according to any one of the preceding claims wherein the ammonia-containing first vent gas stream comprises nitrogen and ammonia.

6. A method according to any one of the preceding claims wherein the ammonia-containing purge gas stream (2) is provided from a purging nitrogen vent gas stream from the vessel engine.

7. A method according to any one of the preceding claims wherein the ammonia-reduced vent gas stream is essentially ammonia-free.

## Patentansprüche

1. Ein Verfahren zum Behandeln eines ammoniakhaltigen Spülgasstroms (2) von einem Motor auf einem See- oder Hochseeschiff, das mindestens die folgenden Schritte beinhaltet:
(a) in einer ersten Stufe, Bereitstellen des ammoniakhaltigen Spülgasstroms (2) von dem Schiffsmotor;
(b) Leiten des ammoniakhaltigen Spülgasstroms durch einen ersten Tank (4), der Wasser (6) enthält, um einen ammoniakreduzierten Spülgasstrom zu erzeugen;
(c) in einer zweiten Stufe, Bereitstellen eines zweiten Tanks (20), der eine kaustische Lösung (22) enthält;
(d) Leiten der kaustischen Lösung aus dem zweiten Tank in den ersten Tank, um eine resultierende Lösung und einen gasförmigen Ammoniakstrom bereitzustellen; und
(e) Leiten des gasförmigen Ammoniakstroms zu einem Speichertank (52) oder einer Wiederverflüssigungseinheit;
(f) in einer dritten Stufe, Leiten der resultierenden Lösung aus dem ersten Tank (4) in den zweiten Tank (20);
(g) Erhitzen der resultierenden Lösung in dem zweiten Tank, um einen Wasserdampfstrom und eine wiederangereicherte kaustische Lösung zu erzeugen;
(h) Kondensieren des Wasserdampfstroms, um einen Flüssigwasserstrom (56) bereitzustellen; und
(i) Leiten des Flüssigwasserstroms in den ersten Tank (4), um das Wasser von Schritt (b) bereitzustellen.

2. Verfahren gemäß Anspruch 1, das ferner den folgenden Schritt beinhaltet:
Begasen des Wassers (6) mit dem ammoniakhaltigen Spülgasstrom (2).

3. Verfahren gemäß Anspruch 1 oder Anspruch 2, das ferner den folgenden Schritt beinhaltet:
Ablassen des ammoniakreduzierten Abgasstroms (2) in die Atmosphäre.

4. Verfahren gemäß Anspruch 1 oder Anspruch 2, das ferner den folgenden Schritt beinhaltet:
Weiterbehandeln des ammoniakreduzierten Abgasstroms (2) durch saures Waschen.

5. Verfahren gemäß einem der vorhergehenden Ansprüche, wobei der ammoniakhaltige erste Abgasstrom Stickstoff und Ammoniak beinhaltet.

6. Verfahren gemäß einem der vorhergehenden Ansprüche, bei dem der ammoniakhaltige Spülgasstrom (2) aus einem Spülungsstickstoff-Abgasstrom aus dem Schiffsmotor bereitgestellt wird.

7. Verfahren gemäß einem der vorhergehenden Ansprüche, wobei der ammoniakreduzierte Abgasstrom im Wesentlichen ammoniakfrei ist.

## Revendications

1. Un procédé de traitement d'un flux de gaz de purge contenant de l'ammoniac (2) provenant d'un moteur sur un vaisseau marin ou de haute mer comprenant au moins les étapes consistant à :
(a) lors d'un premier stade, fournir le flux de gaz de purge contenant de l'ammoniac (2) provenant du moteur de vaisseau ;
(b) faire passer le flux de gaz de purge contenant de l'ammoniac à travers une première cuve (4) contenant de l'eau (6) pour fournir un flux de gaz de ventilation à teneur en ammoniac réduite ;
(c) lors d'un deuxième stade, fournir une deuxième cuve (20) contenant une solution caustique (22) ;
(d) faire passer la solution caustique de la deuxième cuve à la première cuve pour fournir une solution résultante et un flux d'ammoniac gazeux ; et
(e) faire passer le flux d'ammoniac gazeux vers une cuve de stockage (52) ou une unité de reliquéfaction ;
(f) lors d'un troisième stade, faire passer la solution résultante de la première cuve (4) à la deuxième cuve (20) ;
(g) chauffer la solution résultante dans la deuxième cuve pour fournir un flux de vapeur d'eau et une solution caustique rechargée ;
(h) condenser le flux de vapeur d'eau pour fournir un flux d'eau liquide (56) ; et
(i) faire passer le flux d'eau liquide dans la première cuve (4) pour fournir l'eau de l'étape (b).

2. Un procédé tel que revendiqué dans la revendication 1 comprenant en outre l'étape consistant à :
faire barboter le flux de gaz de purge contenant de l'ammoniac (2) dans l'eau (6).

3. Un procédé tel que revendiqué dans la revendication 1 ou la revendication 2 comprenant en outre l'étape consistant à :
ventiler le flux de gaz de ventilation à teneur en ammoniac réduite (2) dans l'atmosphère.

4. Un procédé tel que revendiqué dans la revendication 1 ou la revendication 2 comprenant en outre l'étape consistant à :
traiter plus avant le flux de gaz de ventilation à teneur en ammoniac réduite (2) par épuration en milieu acide.

5. Un procédé selon n'importe laquelle des revendications précédentes dans lequel le premier flux de gaz de ventilation contenant de l'ammoniac comprend de l'azote et de l'ammoniac.

6. Un procédé selon n'importe laquelle des revendications précédentes dans lequel le flux de gaz de purge contenant de l'ammoniac (2) est fourni à partir d'un flux de gaz de ventilation d'azote de purge provenant du moteur de vaisseau.

7. Un procédé selon n'importe laquelle des revendications précédentes dans lequel le flux de gaz de ventilation à teneur en ammoniac réduite est essentiellement dépourvu d'ammoniac.
